Europäisches Patentamt

European Patent Office

Office européen des brevets

(11) Numéro de publication: **0 125 559**
**A1**

## DEMANDE DE BREVET EUROPEEN

(21) Numéro de dépôt: 84104914.1

(22) Date de dépôt: 02.05.84

(51) Int. Cl.³: **B 25 J 17/02**
**B 25 J 19/00**

(30) Priorité: 06.05.83 CH 2505/83
09.05.83 FR 8307847

(43) Date de publication de la demande:
21.11.84 Bulletin 84/47

(84) Etats contractants désignés:
DE GB

(71) Demandeur: MICROBO S.A.
Passage Max. Meuron 6/8
CH-2001 Neuchatel(CH)

(72) Inventeur: Daly, Peter
The Cottage Coran Avenue
Lyme Regis Dorset(GB)

(72) Inventeur: Jeanneret, Maurice
Gare 23
CH-2017 Boudry(CH)

(74) Mandataire: Gresset, Jean
ASUAG-SSIH Société Suisse pour l'Industrie Horlogère
S.A. Faubourg du Lac 6
CH-2501 Bienne(CH)

(54) Robot équipé d'un système de verrouillage.

(57) Robot industriel comportant un bras mobile (10), un poignet (14) monté pivotant autour d'un axe (16) à l'extrémité dudit bras et un arbre cylindrique (18), perpendiculaire audit axe, monté tournant à l'extrémité du poignet. Afin de pouvoir être utilisé pour tenir des pièces soumises à des forces, par exemple lors d'opérations de meulage, le robot comporte des moyens mécaniques de verrouillage, comprenant notamment des mâchoires (46a – b) qui peuvent être appliqueées sur l'arbre (18), et susceptibles d'empêcher à la fois la rotation de l'arbre et le pivotement du poignet (14).

Fig. 1

EP 0 125 559 A1

Cas 319

Robot équipé d'un système de verrouillage

La présente invention est relative aux robots industriels. Elle concerne, plus particulièrement, un robot du type comportant un bras mobile, un poignet monté pivotant sur ce bras et un arbre d'extrémité porté par le poignet.

Lorsqu'un tel robot doit être utilisé pour tenir une pièce pendant que sont effectuées sur celle-ci des opérations telles qu'un polissage ou un meulage, il est bien sûr indispensable que le robot maintienne la pièce aussi immobile que possible. Ce verrouillage est généralement obtenu grâce à l'utilisation de moteurs électriques à fort couple de positionnement. Une telle solution présente cependant le double inconvénient de ne pas garantir une immobilisation parfaite mais surtout de nécessiter un moteur plus lourd, qui ralentit donc sensiblement les mouvements du robot. Ce deuxième inconvénient est particulièrement gênant pour les petits robots dont la rapidité, au moins pour ce qui est du poignet et de l'arbre d'extrémité, est précisément un des atouts majeurs.

La présente invention a pour but de fournir un robot dont le poignet et l'arbre d'extrémité peuvent être immobilisés de manière satisfaisante sans que la rapiditié de ses mouvements en soit sensiblement affectée.

Pour atteindre ce but, le robot selon l'invention est équipé de moyens mécaniques de verrouillage portés par le bras et susceptibles d'agir sur son arbre d'extrémité pour empêcher à la fois sa rotation et le pivotement du poignet.

De façon avantageuse, ces moyens de verrouillage mécaniques comportent:

- deux mâchoires qui sont disposées de part et d'autre de l'arbre d'extrémité symétriquement par rapport au plan diamétral de celui-ci qui est perpendiculaire à l'axe de pivotement du poignet et qui peuvent venir enserrer ledit arbre;

- deux rails circulaires dont le centre est sensiblement confondu avec l'axe de pivotement du poignet et qui sont montés solidaires du bras symétriquement par rapport audit plan diamétral de manière à ce que, pour toute position dudit poignet, l'arbre se trouve entre eux; et

- des organes de serrage portés par chacun des deux rails, pour appliquer les deux mâchoires sur l'arbre de façon à assurer son immobilisation en rotation et empêcher en même temps le pivotement du poignet.

D'autres caractéristiques de la présente invention ressortiront de la description qui va suivre, faite en regard des dessins annexés et donnant, à titre explicatif mais nullement limitatif, une forme avantageuse de réalisation de ce robot. Sur ces dessins:

- la figure 1 est une vue générale en coupe partielle d'un robot selon l'invention,
- la figure 2 est une vue en coupe partielle selon la ligne II-II de la figure 1, et
- la figure 3 est une vue en coupe partielle selon la ligne III-III de la figure 1.

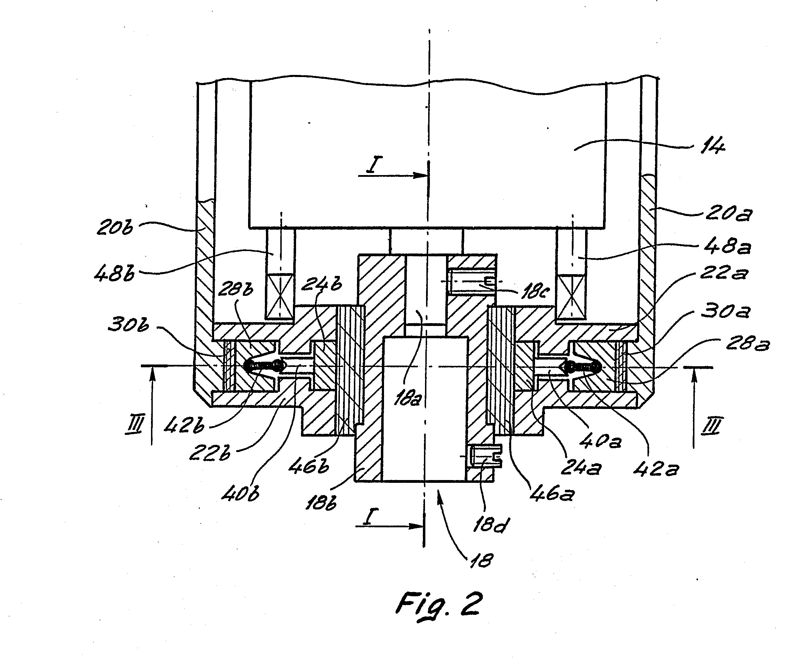

Sur ces figures, on a représenté schématiquement en 10 un bras de robot mobile que des moyens non représentés permettent de faire pivoter autour d'un axe vertical 12 et, éventuellement, de déplacer selon une direction parallèle à cet axe. Ce bras porte, à son extrémité, un poignet 14 qui est monté pivotant autour d'un axe horizontal 16. Ce pivotement est assuré par un moteur électrique (non représenté) placé à l'intérieur du bras 10. Un deuxième moteur (non représenté) disposé à l'intérieur du poignet 14 entraîne en rotation un arbre d'extrémité 18, d'axe perpendiculaire à l'axe de pivotement 16 du poignet. Cet arbre est constitué d'un axe 18a entraîné par le moteur et d'une douille 18b montée sur l'axe 18a et fixée à celui-ci à l'aide d'une vis 18c qui apparaît sur la figure 2. Cette douille reçoit un outil (non représenté) fixé à l'aide d'une vis 18d, qui porte la pièce sur laquelle doivent être effectuées, par exemple, des opérations de meulage de facettes ou de polissage.

Ce robot, jusqu'ici tout-à-fait classique, est équipé d'un système de verrouillage mécanique agissant sur l'arbre d'extrémité 18 pour empêcher à la fois la rotation de celui-ci et le pivotement du poignet 14. Ce système va être maintenant décrit en détail.

Le bras 10 porte deux joues annulaires 20a et 20b dont le centre coincide avec l'axe de pivotement 16 du poignet et qui sont disposées symétriquement de part et d'autre du plan diamétral de l'arbre d'extrémité 18 perpendiculaire à l'axe 16. Le rayon moyen de ces deux joues est tel que, pour toute position du poignet 14, l'arbre 18 se trouve entre elles.

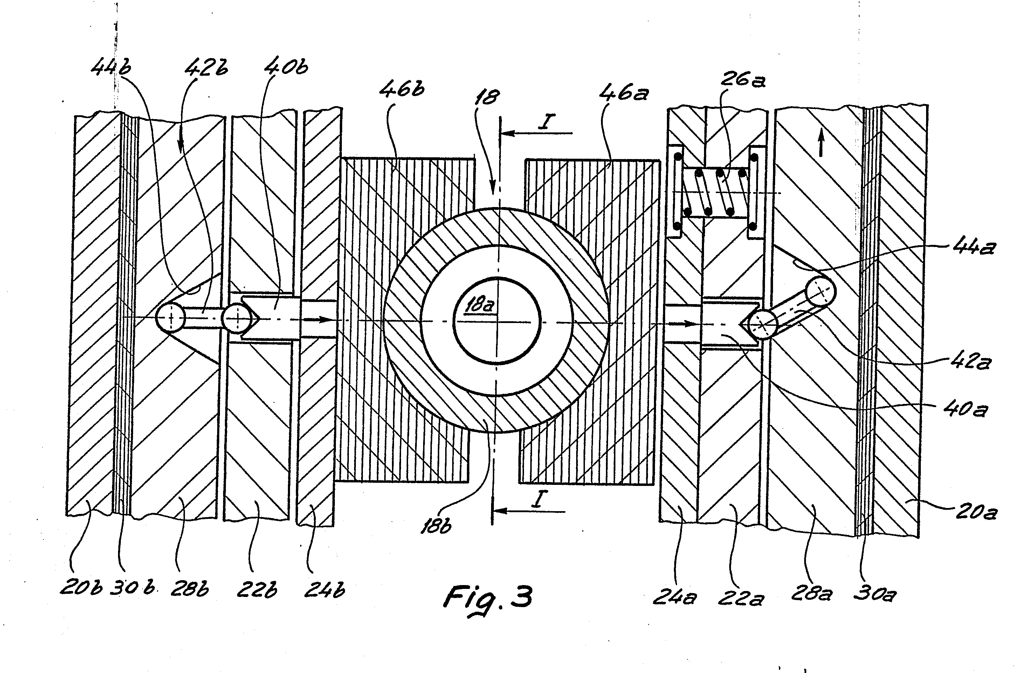

Les joues 20a et 20b portent respectivement, sur leur face en regard, deux rails 22a et 22b également annulaires et fixés aux joues par des vis qui, dans un but de simplification des dessins, n'ont pas été représentées. Le rail 22a est muni d'une gorge interne (apparaissant sur la figure 2) à l'intérieur de laquelle est disposé un sabot annulaire 24a que des ressorts 26a rappellent contre le fond de la gorge. L'un de ces ressorts apparaît mieux sur la figure 3. Le rail 22a est également muni d'une gorge externe (figure 2) dans laquelle est disposé un deuxième sabot annulaire 28a qui, contrairement au sabot 24a, est légèrement plus court que la gorge et peut donc coulisser dans celle-ci. Un anneau en nylon 30a, disposé dans la gorge, y facilite le glissement du sabot 28a.

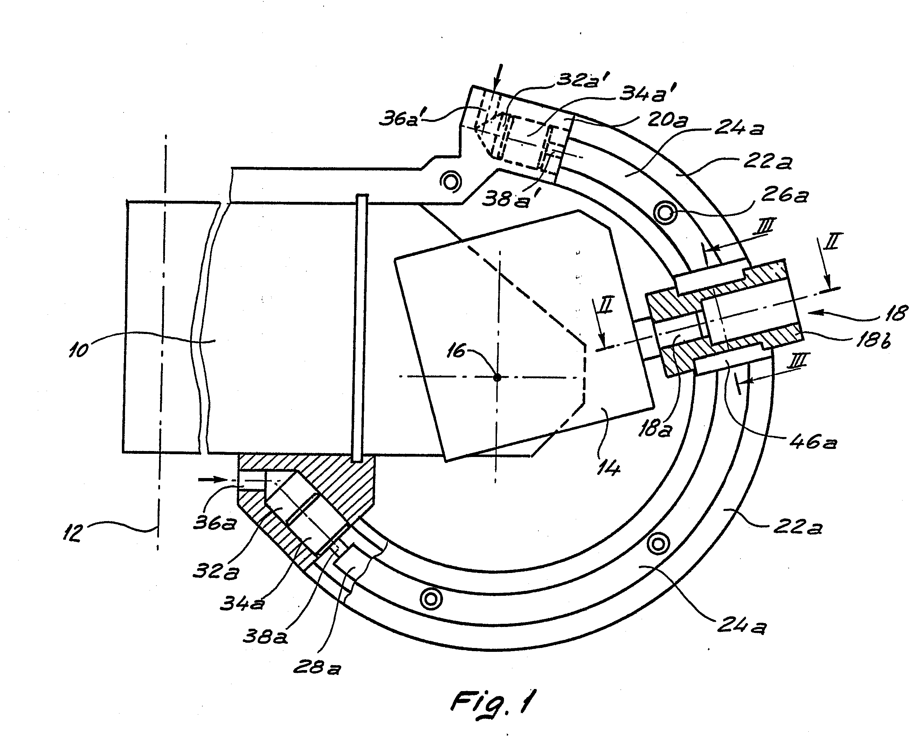

Pour commander le coulissement du sabot 28a, il est prévu, à chaque extrémité de la joue 20a, une chambre cylindrique 32a-a', à l'intérieur de laquelle un piston 34a-a' peut se déplacer sous l'action d'air comprimé introduit dans la chambre par un canal 36a-a'. Les tiges 38a-a' du piston agissant sur l'une ou l'autre extrémité du sabot 28a pour provoquer son déplacement. Lorsque le piston inférieur 34a est en position enfoncée (fig. 1), le sabot est en position dite haute. Lorsque, au contraire, c'est le piston supérieur 34a' qui est enfoncé, le sabot se trouve en position dite basse.

Comme le montrent les figures 2 et 3, le sabot interne 24a (non coulissant) porte sur toute sa longueur une série de tenons 40a (dont un seul apparaît sur les figures) qui traversent librement des canaux percés dans le rail 22a. Ces tenons ont leur extrémité creusée en forme de cône pour recevoir l'extrémité d'une biellette 42a constituée d'une tige dont les deux extrémités présentent des cuvettes sphériques et de deux billes auxquelles ces cuvettes servent de siège. L'une de ces billes prend place dans l'extrémité du tenon 40a, tandis que l'autre bille vient au fond d'une ouverture conique 44a percée dans le sabot externe coulissant 28a. La profondeur des cônes 44a est telle que la tige des biellettes 42a y prend place pratiquement tout entière.

Les mêmes éléments se retrouvent de l'autre côté de l'arbre d'extrémité 18, où ils sont désignés sur les dessins par les mêmes numéros de référence affectés de la lettre b. On notera que, sur la partie droite de la figure 3, la biellette 42a occupe une position inclinée qui est obtenue lorsque le sabot coulissant 28a est en position haute. Par contre, dans la portion de gauche de cette figure, la biellette 42b est dans une position horizontale, obtenue lorsque le sabot coulissant 28b est en position basse. Cette différence a été montrée simplement dans un but explicatif, mais il va de soi qu'en réalité les deux biellettes 42a et 42b sont simultanément inclinées ou horizontales, étant donné que les chambres inférieures 32a et 32b sont toujours alimentées simultanément, de même que les chambres supérieures 32a' et 32b'.

Deux mâchoires identiques 46a et 46b sont disposées de part et d'autre de l'arbre d'extrémité du robot, symétriquement par rapport au plan diamétral de l'arbre déjà mentionné. Ces mâchoires sont réalisées avantageusement en un tissu imprègnié de plastique, connu sous le nom de "Canevasite". Naturellement, d'autres matières peuvent être utilisées. Chaque mâchoire comporte une portion cylindrique, de rayon sensiblement égal au rayon extérieur de l'arbre et, du côté opposé, une face plane qui se trouve en regard des sabots internes 24a ou 24b. Ces deux mâchoires ne sont solidaires d'aucun élément du mécanisme; elles sont maintenues en place simplement sous l'action qu'excercent sur elles l'arbre et le sabot voisin.

Enfin, le poignet 14 porte deux tenons 48a-b constituant des butées pour les rails 22a-b dont ils évitent l'écartement. Leur rôle apparaîtra mieux plus loin.

Le fonctionnement du mécanisme de verrouillage selon l'invention ressort de la description qui précède.

Si les deux sabots coulissants 28a et 28b sont maintenus en position haute (partie droite de la figure 3) en injectant de l'air comprimé dans les chambres inférieures 32a-b du mécanisme, les biellettes 42a-b se trouvent, comme déjà indiqué, en position inclinée. La distance qui sépare le niveau du fond des cônes 44a-b du niveau de l'extrémité conique des tenons 40a-b est alors minimale, de sorte que, sous l'action des ressorts de rappel 26a-b, les deux sabots internes 24a-b s'éloignent des mâchoires 46a-b pour venir au contact des rails 22a-b. L'espace entre les sabots 24a-b et l'arbre 18 est alors légèrement plus large que les mâchoires 46a-b qui laissent donc celui-ci libre de tourner. En outre, rien ne s'oppose au pivotement du poignet 14 autour de son axe.

Si, par contre, on souhaite faire agir le mécanisme de verrouillage, il suffit de faire glisser les sabots 28a-b en position basse (partie gauche de la figure 3) en injectant de l'air comprimé dans les chambres supérieures 32a'-b' du mécanisme. Comme déjà indiqué, les biellettes 42a-b sont amenées ainsi en position horizontale. La distance qui sépare le niveau du fond des cônes 44a-b du niveau de l'extrémité cônique des tenons 40a-b est alors maximale, de sorte que les sabots internes 24a-b sont poussés en direction de l'arbre 18, appliquant alors les mâchoires 46a-b contre celui-ci. Les mâchoires se trouvent donc coincées entre l'arbre 18 et les sabots 24a-b, ce qui empêche à la fois la rotation de l'arbre et le pivotement du poignet 14. Les tenons 48a-b servent alors à éviter l'écartement des rails 22a-b sous l'action des biellettes 42a-b, renforçant ainsi les joues 20a-b.

Ainsi, pour résumer, le verrouillage du robot est obtenu en alimentant en air comprimé les chambres supérieures 32a'-b' du mécanisme, de manière à placer les sabots 24a-b en position basse. A l'inverse, pour obtenir le déverouillage, il suffit s'appliquer l'air comprimé aux chambres inférieures 32a-b, de manière à placer les deux sabots en position haute. Ce verrouillage mécanique est, naturellement, beaucoup plus efficace que tout autre verrouillage. En outre, le poignet et l'arbre d'extrémité ne sont pas alourdis par le système, de sorte qu'ils gardent toute leur rapidité de mouvement. Le but de l'invention est donc parfaitement atteint.

## REVENDICATIONS

1. Robot industriel, du type comportant:
- un bras mobile (10);
- un poignet (14) monté pivotant autour d'un axe (16) à l'extrémité dudit bras; et
- un arbre cylindrique (18) perpendiculaire à l'axe de pivotement du poignet et monté tournant à l'extrémité de celui-ci, caractérisé en ce qu'il comporte, en outre, des moyens mécaniques de verrouillage susceptibles d'agir sur ledit arbre pour empêcher à la fois sa rotation et le pivotement du poignet.

2. Robot selon la revendication 1, caractérisé en ce que lesdits moyens de verrouillage comportent:
- deux mâchoires (46a-b) disposées de part et d'autre de l'arbre symétriquement par rapport au plan diamétral de celui-ci qui est perpendiculaire à l'axe de pivotement du poignet et pouvant être appliquées contre l'arbre;
- deux rails circulaires (22a-b) dont le centre est sensiblement confondu avec l'axe de pivotement du poignet et qui sont montés solidaires du bras symétriquement par rapport audit plan diamétral, de manière à ce que, pour toute position du poignet, l'arbre se trouve entre eux; et
- des organes de serrage portés par lesdits rails, pour appliquer les deux mâchoires sur l'arbre de façon à assurer son immobilisation en rotation et à empêcher, en même temps, le pivotement du poignet.

3. Robot selon la revendication 2, caractérisé en ce que lesdits organes de serrage comportent, pour chaque rail:
- un premier (24a) et un deuxième (28a) sabots disposés parallèlement l'un à l'autre et dont le premier, faisant face à l'une desdites mâchoires (46a), peut occuper une première position pour laquelle il est appliqué contre la mâchoire et une deuxième position pour laquelle il n'est pas appliqué contre ladite mâchoire;
- une pluralité de biellettes (42a) disposées entre lesdits sabots et susceptibles d'occuper, selon la position relative de ceux-ci, une première position pour laquelle le premier sabot (24a) est mis dans sa première position et une deuxième position pour laquelle le premier sabot est mis dans sa deuxième position; et

- des moyens pour modifier la position relative des deux sabots.

4. Robot selon la revendication 3, caractérisé en ce que les moyens pour modifier la position relative des deux robots comportent au moins un piston (34a) actionné pneumatiquement et communiquant son mouvement à l'un des sabots (28a).

Fig.1

0125559

Fig. 2

Fig. 3

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 283 760 (HAGENUK)<br>* page 6, lignes 16-31; page 13, ligne 28 - page 14, ligne 2 *<br><br>--- | 1 | B 25 J 17/02<br>B 25 J 19/00 |
| A | FR-A-1 440 857 (COMMISSARIAT A L'ENERGIE ATOMIQUE)<br>* en entier *<br><br>--- | 1 | |
| A | GB-A- 229 537 (VEASEY)<br><br>--- | | |
| A | DE-B-1 750 592 (GEORG MULLER KUGELLAGERFABRIK)<br><br>--- | | |
| A | US-A-3 661 376 (HILL et al.)<br><br>----- | | |

**DOMAINES TECHNIQUES RECHERCHES (Int. Cl. ³)**

B 25 J
B 23 Q

Le présent rapport de recherche a été établi pour toutes les revendications

| Lieu de la recherche | Date d'achèvement de la recherche | Examinateur |
|---|---|---|
| LA HAYE | 19-07-1984 | LAMMINEUR P.C.G. |

OEB Form 1503. 03.82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant